# FASCICULE DE BREVET EUROPEEN

(11) **EP 2 577 323 B1**
(45) Date de publication et mention de la délivrance du brevet: **04.03.2015**
(21) Numéro de dépôt: 11726893.8
(22) Date de dépôt: 24.05.2011
(51) Int. Cl.: G01P 5/165, G01P 13/02, G01F 1/46, F02M 21/02, F16N 21/00, F01D 17/08, F01D 25/00, F16N 25/00

(54) **DISPOSITIF D'ACQUISITION/DISTRIBUTION MULTIPOINTS DE FLUIDE, EN PARTICULIER SONDE DE PRISE DE PRESSION DANS UNE ENTRÉE D'AIR DE TURBOMACHINE**
VORRICHTUNG ZUR AUFNAHME/VERTEILUNG EINER FLÜSSIGKEIT AN MEHREREN STELLEN, IM BESONDEREN EINE SONDE ZUR DRUCKMESSUNG AM LUFTEINLASS EINER TURBOMASCHINE
DEVICE FOR MULTIPOINT ACQUISITION/DISTRIBUTION OF FLUID, IN PARTICULAR PROBE FOR TAPPING PRESSURE IN A TURBOMACHINE AIR INLET

(30) Priorité: 25.05.2010 FR 1054003
(43) Date de publication de la demande: 10.04.2013
(73) Titulaire: Turbomeca, 64510 Bordes (FR)
(72) Inventeur: BOISSELEAU, Denis, F-64420 Artigueloutan (FR); ARILLA, Jean-Baptiste, 64320 Bizanos (FR); BISCAY, Pierre, F-64140 Lons (FR)
(74) Mandataire: Bringer, Mathieu
(86) Numéro de dépôt international: PCT/FR2011/051171
(87) Numéro de publication internationale: WO 2011/148094

(56) Documents cités:
- EP-A2- 2 039 978
- WO-A1-85/01578
- WO-A1-91/09274
- WO-A1-2006/092375
- DE-A1- 2 036 044
- DE-C1- 19 640 606
- GB-A- 2 231 667

## Description

L'invention concerne un dispositif multipoints d'acquisition ou de distribution de fluide, en particulier une sonde de prise de la pression dans une entrée d'air d'une turbomachine, par exemple un moteur d'hélicoptère.

Afin de comprendre et de minimiser les pertes d'installation sur un aéronef, différents paramètres sont mesurés en entrée d'air et en échappement moteur lors d'essais en vol. S'agissant de l'entrée d'air, les deux paramètres importants sont la pression totale et l'angle d'écoulement pour effectuer une mesure de giration. Dans chaque cas de vol, ces mesures doivent être effectuées rapidement, en quelques secondes, pour des questions de faisabilité et de coût.

L'invention concerne en particulier le domaine de la détection des valeurs des paramètres de pression totale et d'angle d'écoulement de l'air en entrée de moteurs d'aéronefs. Plus généralement, l'invention se rapporte aux domaines de l'acquisition multipoints, comme dans le cas des sondes, ou de la distribution multipoints de fluide, par exemple pour les systèmes d'injection de fluide dans un conduit ou de lubrification de pièces mécaniques. Dans tous les cas, l'invention s'applique sur des pièces nécessitant des entrées/sorties de fluide multipoints.

Dans le cas de l'acquisition de valeurs de paramètres, les sondes actuellement utilisées comportent trois capteurs permettant d'effectuer trois mesures sur une même hauteur pour obtenir une couverture angulaire suffisante. De telles sondes sont décrites par exemple dans le document de brevet US 5 233 865. De telles sondes fournissent des valeurs de pression statique moyenne et des caractéristiques de pression d'un écoulement d'air turbulent.

Le document GB 2 231 667 A décrit une sonde Pitot rétractable comprenant deux conduits internes, qui sont ménagés dans des tubes télescopiques et qui font à la fois office de moyens pour déployer la sonde d'une position rétractée à une position déployée et de communication des mesures de pression effectuées par la sonde. Lesdits conduits s'étendent le long de l'axe cylindrique de la sonde entre une base de la sonde et une cloison arrière. Ladite sonde Pitot est prévue pour être placée parallèlement au flux d'air.

Le document WO 85/01578 A1 décrit un dispositif de détection de la pression atmosphérique, qui possède plusieurs orifices ménagés sur la peau externe du corps sur un plan le long de l'axe du corps. Cette sonde comprend une pluralité de conduits internes rectilignes.

Dans la pratique, trois sondes de ce type sont utilisées avec un système de mise en rotation pour acquérir un nombre de mesures propre à effectuer une évaluation de pression totale et de direction d'écoulement. Alternativement, des groupes de trois sondes fixes peuvent être utilisées.

Or des mesures d'acquisition simultanées et rapides nécessitent des sondes fixes et d'encombrement réduit afin de ne pas perturber l'écoulement d'air et de minimiser l'obstruction devant le compresseur.

Et le type de sonde décrit ci-dessus ne permet pas d'acquérir une mesure de giration précise en entrée d'air d'un moteur en condition de vol. En effet, une telle acquisition suppose :
- une cartographie détaillée des mesures : les sondes actuelles fournissent un rapport insuffisant entre le nombre de prise et le nombre de sondes ;
- une perturbation négligeable du fonctionnement du compresseur : ces sondes provoquent une obstruction et un sillage trop importants ;
- un temps d'essai suffisamment court : les sondes connues possèdent un temps de réponse élevé et nécessitent un balayage de chaque position azimutale ;
- un essai sur cellule représentatif : le système de rotation des sondes remettrait en cause l'intégration du moteur sur cellule et donc la représentativité de l'essai.

De manière générale, l'invention vise à réaliser une acquisition ou une distribution de fluide - en multipoints - précise, rapide et distinctement répartie avec une bonne résolution spatiale pour une couverture angulaire donnée. Pour ce faire, l'invention prévoit un agencement torsadé de conduits permettant d'effectuer plusieurs acquisitions/distributions sur plusieurs hauteurs avec un même dispositif.

En particulier, concernant une acquisition de mesure de giration en vol, l'invention vise à obtenir une compacité limitant l'encombrement, un nombre suffisant de points de mesures pour cartographier l'écoulement d'air sans mise en rotation des sondes, une implantation en amont du compresseur sans altérer l'environnement, une acquisition des mesures en un temps de courte durée - par exemple en moins de trente secondes -, sans dégrader le fonctionnement du moteur - notamment en conservant une bonne tenue mécanique au regard des vibrations - pendant la campagne d'essais.

Plus précisément, la présente invention a pour objet un dispositif d'acquisition/distribution multipoints de fluide selon la revendication 1.

Il apparaît, ainsi, que pour un même encombrement frontal et une même couverture angulaire, la configuration torsadée de plusieurs conduits (trois conduits dans un exemple élémentaire) permet de réaliser des mesures (deux mesures dans l'exemple élémentaire) réparties sur un nombre maximisé de plans parallèles (trois plans dans cet exemple). Le tracé hélicoïdal permet en effet d'escamoter un conduit et d'ajouter hélicoïdalement un autre conduit entre deux plans d'acquisition, alors qu'une solution à conduits rectilignes de même encombrement frontal et de même couverture, faisant face au même champ de mesure, ne peut utiliser qu'un nombre inférieur de conduits (par exemple deux conduits dans des conditions identiques) et ne permet alors un même nombre de mesures (deux dans l'exemple) que dans un nombre inférieur de plans (ici un seul plan).

En outre, le nombre de conduits approprié peut être déterminé en fonction des contraintes technologiques (couverture angulaire des mesures dans un même plan, diamètre des conduits, diamètre et longueur du corps du dispositif, etc.) et/ou de certaine priorités (par exemple en privilégiant le nombre de mesures par plan d'acquisition ou le nombre de plans d'acquisition).

Par ailleurs, les plans d'acquisition/distribution parallèles sont perpendiculaires à l'axe du corps du dispositif.

Selon des modes de réalisation particuliers :
- les conduits internes présentent une section de forme oblongue afin de maximiser le volume dédié aux conduits rapporté au volume de la sonde dans le tronçon d'acquisition/distribution ;
- le corps de sonde est cylindrique et les conduits internes ont une section en forme de pétales de fleur distribués circulairement dans la section de sonde, chaque pétale ayant une partie transversale élargie et une partie effilée orientée de manière centripète vers l'axe de ce corps ;
- le transfert d'acquisition/distribution entre les conduits et les orifices est assuré par des canaux transversaux.

L'invention se rapporte également à l'utilisation d'un tel dispositif choisie parmi une sonde de mesure de giration d'entrée d'air dans un compresseur de turbomachine, un injecteur de liquide ou de gaz dans une veine et un lubrificateur de pièce.

En particulier, dans le cas de l'utilisation en tant que sonde, le dispositif peut présenter les caractéristiques avantageuses suivantes :
- le corps de sonde présente une première partie ou tronçon d'acquisition de pression formant un cylindre de moins de 6 mm de diamètre, de préférence sensiblement 5 à 5,5 mm ;
- les conduits et les canaux sont formés *par fusion sélective sur lit de poudre* lors de la fabrication du corps à partir de poudre *d'alliage* métallique;
- le nombre de conduits internes est égal à neuf, trois orifices sont disposés sur trois hauteurs différentes ;
- les conduits de transfert d'acquisition de pression se composent sur chaque hauteur d'acquisition d'un conduit central disposé entre deux conduits latéraux, les conduits latéraux présentant un décalage angulaire compris entre 35 et 45°, de préférence sensiblement 40°, par rapport au conduit central ; une telle ouverture angulaire permet d'embrasser au mieux la giration en régime laminé sur les conduits latéraux alors que la prise de pression totale est cadrée sur les conduits centraux.

Dans ces conditions, le nombre de prises de mesure simultanées par sonde est sensiblement augmenté - par exemple d'un facteur 3 par rapport aux sondes antérieures -, la répartition des hauteurs de mesure peut être adaptée à tous les carters moteur, et la diminution de la perte de charge dans les conduit permet un temps de récupération de la mesure sensiblement plus court.

D'autres caractéristiques et avantages de la présente invention apparaîtront à la lecture de l'exemple de réalisation détaillé qui suit, en référence aux figures annexées qui représentent, respectivement :
- la figure 1, une vue en perspective d'un exemple de sonde selon l'invention pour être installée en amont d'un compresseur de turbomachine;
- la figure 2, une vue partielle en transparence de cette sonde montrant en particulier les neuf conduits internes en mouvement hélicoïdal dans la zone de détection, et
- la figure 3, une vue perspective partielle de la sonde sectionnée selon une coupe au niveau d'un plan de détection, mettant en évidence la forme en pétale des conduits sectionnés et les orifices d'entrée correspondants.

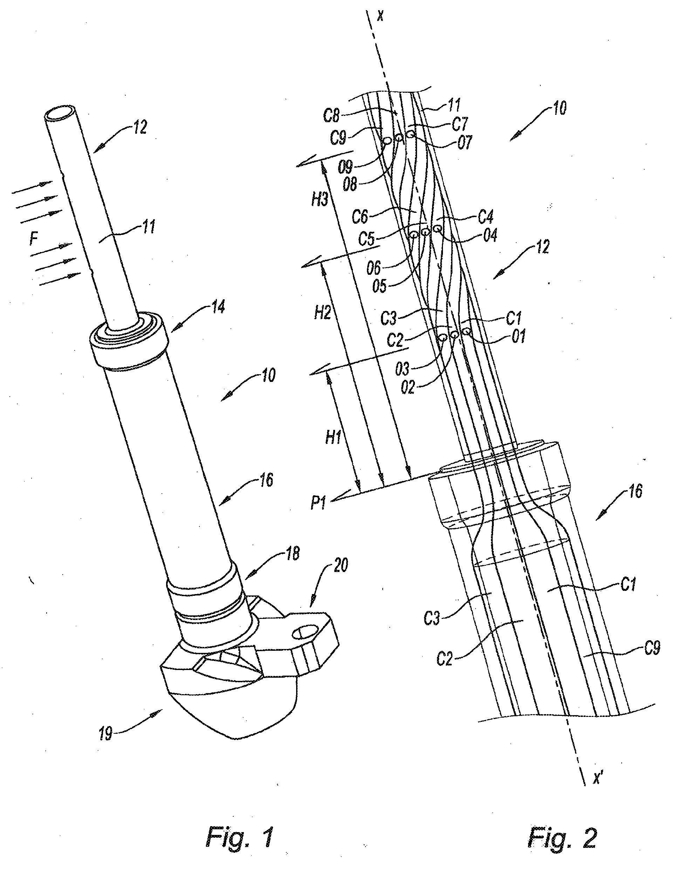

En référence à la figure 1, une sonde usinée 10 de mesure de giration d'un compresseur de turbomachine conforme à l'invention comporte une première partie cylindrique 12, de plus faible diamètre - égal à 5 mm dans l'exemple -, prolongée par un épaulement 14 sur une deuxième partie cylindrique 16 de plus large diamètre, environ 14 mm dans l'exemple illustré. Cette deuxième partie 16 est elle-même prolongé par un épaulement 18 sur un socle 19 présentant une embase usinée 20 de fixation de la sonde.

La première partie 12 constitue un tronçon cylindrique définissant une zone d'acquisition de pression : elle possède des orifices circulaires d'entrée de mesure - formés dans la peau externe 11 de cette première partie cylindrique. En référence à la vue en transparence de la figure 2, la structure interne de la sonde 10 apparaît. Les orifices 01 à 09 sont alignés sur trois plans de détection de hauteurs différentes, repérées par rapport au plan P1 de liaison entre les deux parties 12 et 14, respectivement : 01, 02 et 03 à une hauteur H1, 04, 05 et 06 à une hauteur H2, ainsi que 07, 08 et 09 à une hauteur H3.

Les orifices 01 à 09 sont positionnés au regard de conduits internes, respectivement C1 à C9. Les conduits forment des courbes hélicoïdales parallèles entre les plans des hauteurs H1 et H3, de sorte que la position des conduits tournent d'un tiers de tour entre deux hauteurs successives. En extrémité, les conduits de mesure sont obturés. La deuxième partie 16 constitue la partie de transmission vers des moyens de mesure, les conducteurs étant alors éloignés de l'axe central X'X de la sonde 10 tout en restant parallèles à cet axe. En effet, cette partie 16 est en dehors de la zone d'acquisition de pression et l'encombrement n'est alors plus un facteur déterminant.

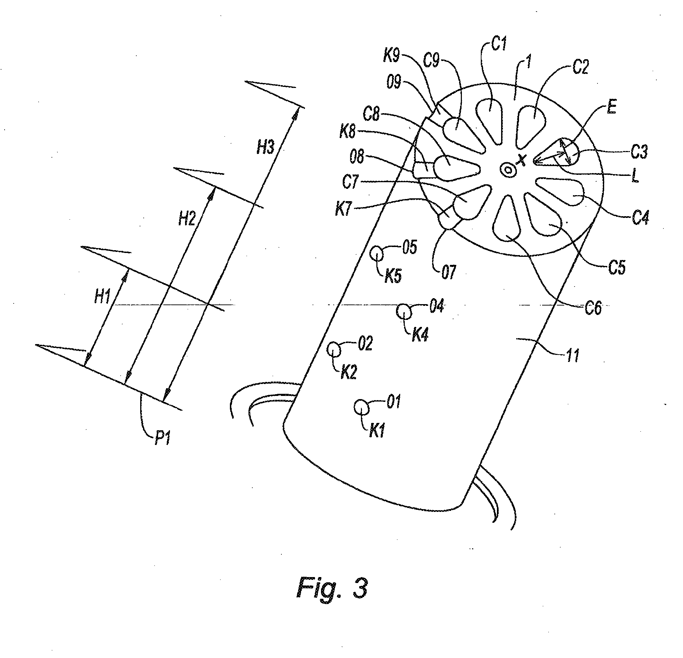

La vue en coupe de la figure 3 illustre plus précisément, au niveau du plan de section de hauteur H3, la forme en pétale des conduits C1 à C9 formés dans le corps 1, et des canaux K7 à K9 qui assurent le transfert d'acquisition de pression entre les orifices 07 à 09 formés dans la peau 11 du corps 1, et les conducteurs correspondants, respectivement C7 à C9.

Au niveau du plan de détection de hauteur H2, n'apparaissent que les orifices 04 et 05 sur lesquels débouchent les canaux K4 et K5. De manière similaire, au niveau du plan de hauteur H1, apparaissent les orifices 01 et 02 formés dans le corps 1 pour permettre aux canaux K1 et K2 de déboucher sur l'extérieur.

La partie effilée « L » des pétales que forment les conduits C1 à C9 est orientées radialement, de manière centripète, vers l'axe X'X de la sonde. La partie élargie « E » de ces pétales sur laquelle débouchent les canaux K1 à K9, située donc au plus loin de l'axe X'X, a une largeur d'environ 0, 6 mm, alors que les canaux ont un diamètre de l'ordre de 0, 4 mm. L'orientation des pétales et leurs dimensions permet d'utiliser au mieux l'espace cylindrique dédié aux conducteurs et réduit au maximum pour éviter les perturbations provoquées par la présence d'une sonde en amont d'un compresseur.

En bord d'attaque de la sonde, les conduits se composent sur chaque niveau H1 à H3 - ainsi que les orifices et les canaux de liaison correspondants-d'un conduit (orifice et canal) central, C8 (08 et K8) sur la figure, disposé entre deux conduits (orifices et canaux) latéraux, C7 et C9 (07 et 09, K7 et K9). Les conduits, orifices ou canaux latéraux présentent avantageusement un décalage angulaire compris entre 35 et 45°, de préférence sensiblement 40° - mesuré par l'angle centré sur l'axe X'X - par rapport au conduit, respectivement orifice ou canal central.

Les conduits C1 à C9 sont réalisés par tout moyen connu. Dans l'exemple, ils résultent d'une fusion sélective d'un lit de poudre métallique lors de la fabrication du corps par fusion de cette poudre.

En fonctionnement, le flux d'air entrant F (figure 1) vient, en amont du compresseur, exercer une pression variable sur le bord d'attaque de la sonde et cette pression se propage dans les conduits internes à partir des canaux de transfert de pression. Selon les conditions de vol, la pression produit une tension spécifique dans chacun des neuf capteurs micro-piézoélectriques en contact avec l'extrémité des conduits. La mesure de giration se fait dans tout le domaine de vol. L'intensité des courants électriques fournis par ces capteurs est ensuite analysée dans une unité centrale pour en déduire une valeur de la pression totale et de l'angle d'écoulement du flux d'air entrant.

L'invention n'est pas limitée à l'exemple de réalisation décrit et représenté. Il est par exemple possible de prévoir des formes différentes pour les orifices, par exemple adaptée à l'inclinaison du conduit en mouvement hélicoïdal : une forme oblongue, par exemple elliptique. Le corps de sonde peut également avoir une forme cylindrique de base circulaire, oblongue, ou ovale. Par ailleurs le nombre de conduits peut être supérieur à neuf. La partie centrale de la sonde, dont le volume augmente avec le nombre de conduits, peut être utilisée pour intégrer d'autres éléments, par exemple des sondes de température. De plus, le corps peut avoir des formes variées et adaptées au contexte, d'axe longitudinal ou courbe, et les conduits peuvent ne pas être parallèles.

## Revendications

1. Dispositif d'acquisition/distribution multipoints de fluide comportant au moins deux conduits internes (C1 à C9) disposés dans un corps (1) cylindrique, **caractérisé en ce que** ces conduits suivent des tracés hélicoïdaux dans un tronçon cylindrique (12) du corps (1), de même axe que celui du corps (1), dans lequel plusieurs acquisitions/distributions de fluide sont effectuées par propagation dans les conduits (C1 à C9) à partir d'orifices (01 à 09) d'entrée/sortie formés sur une peau (11) radiale externe du tronçon cylindrique du corps en regard de ces conduits (C1 à C9) et situés dans plusieurs plans parallèles à différentes hauteurs (H1, H2, H3) le long dudit axe dudit corps (1), la position des orifices (01 à 09) et le pas des conduits (C1 à C9) étant déterminés de sorte qu'au moins un orifice corresponde à un conduit interne et un seul.

2. Dispositif d'acquisition/distribution multipoints selon la revendication 1, dans lequel les conduits internes (C1 à C9) présentent une section de forme oblongue afin de maximiser le volume dédié aux conduits rapporté au volume de la sonde dans le tronçon d'acquisition/distribution (12).

3. Dispositif d'acquisition/distribution multipoints selon l'une des revendications 1 ou 2, dans lequel le corps de sonde (1) est cylindrique et les conduits internes (C1 à C9) ont une section en forme de pétales de fleur distribués circulairement dans la section de sonde (10), chaque pétale ayant une partie transversale élargie (E) et une partie effilée (L) orientée de manière centripète vers l'axe (X'X) de ce corps (1).

4. Dispositif d'acquisition/distribution multipoints selon l'une quelconque des revendications 1 à 3, dans lequel le transfert d'acquisition/distribution entre les conduits (C1 à C9) et les orifices (O1 à 09) est assuré par des canaux transversaux (K1 à K9).

5. Dispositif d'acquisition/distribution multipoints selon l'une quelconque des revendications 1 à 3, dans lequel le nombre d'orifices d'entrées/sorties (01 à 09) peut être choisi pour toute répartition intermédiaire entre tous les orifices sur une seule hauteur (H1, H2, H3) et un seul orifice par hauteur différente en adaptant le pas des conduits (C1 à C9) à chaque hauteur (H1, H2, H3).

6. Utilisation d'un dispositif selon l'une quelconque des revendications précédentes, choisie parmi une sonde (10) de mesure de giration d'entrée d'air (F) dans un compresseur de turbomachine, un injecteur de liquide ou de gaz dans une veine et un lubrificateur de pièce mécanique.

7. Utilisation selon la revendication précédente en tant que sonde (10), dans laquelle un corps (1) de sonde présente une première partie (12) ou tronçon d'acquisition de pression formant un cylindre de moins de 6 mm de diamètre, de préférence sensiblement 5 à 5,5 mm.

8. Utilisation selon la revendication 7, dans laquelle les conduits (C1 à C9) et les canaux (K1 à K9) sont par fusion sélective lors de la fabrication du corps à partir de poudre d'alliage métallique.

9. Utilisation selon l'une quelconque des revendications 7 à 9, dans laquelle le nombre de conduits internes (C1 à C9) est égal à neuf, trois orifices (O1 à 03, 04 à 06, O7 à 09) sont disposés sur trois hauteurs (H1 à H3) différentes.

10. Utilisation selon la revendication précédente, dans laquelle les conduits de transfert d'acquisition de pression se composant sur chaque hauteur d'acquisition (H3) d'un conduit centrale (C8) disposé entre deux conduits latéraux (C7, C9), les conduits latéraux (C7, C9) présentant un décalage angulaire compris entre 35 et 45°, de préférence sensiblement 40°, par rapport au conduit central (C8).

## Patentansprüche

1. Vorrichtung zur Aufnahme/Verteilung eines Fluids an mehreren Punkten, umfassend mindestens zwei innere Leitungen (C1 bis C9), die in einem zylindrischen Körper (1) angeordnet sind, **dadurch gekennzeichnet, dass** diese Leitungen spiralförmigen Spuren in einem zylindrischen Abschnitt (12) des Körpers (1) mit derselben Achse wie jene des Körpers (1) folgen, wobei mehrere Aufnahmen/Verteilungen von Fluid durch Ausbreitung in den Leitungen (C1 bis C9) von Eingangs-/Ausgangsöffnungen (01 bis 09) erfolgen, die auf einer äußeren radialen Haut (11) des zylindrischen Abschnitts des Körpers gegenüber diesen Leitungen (C1 bis C9) ausgebildet und in mehreren parallelen Ebenen auf verschiedenen Höhen (H1, H2, H3) entlang der Achse des Körpers (1) angeordnet sind, wobei die Position der Öffnungen (01 bis 09) und der Abstand der Leitungen (C1 bis C9) derart bestimmt sind, dass mindestens eine Öffnung einer inneren Leitung entspricht, und zwar einer einzigen.

2. Vorrichtung zur Aufnahme/Verteilung an mehreren Punkten nach Anspruch 1, bei der die inneren Leitungen (C1 bis C9) einen Querschnitt von länglicher Form aufweisen, um das für die Leitungen bestimmte Volumen, das auf das Volumen der Sonde in dem Abschnitt zur Aufnahme/Verteilung (12) aufgesetzt ist, zu maximieren.

3. Vorrichtung zur Aufnahme/Verteilung an mehreren Punkten nach einem der Ansprüche 1 oder 2, bei der der Sondenkörper (1) zylindrisch ist und die inneren Leitungen (C1 bis C9) einen Querschnitt in Form von Blütenblättern haben, die kreisförmig in dem Sondenquerschnitt (10) verteilt sind, wobei jedes Blütenblatt einen erweiterten Querteil (E) und einen spitz zulaufenden Teil (L) hat, der zentripetal zur Achse (X'X) dieses Körpers (1) gerichtet ist.

4. Vorrichtung zur Aufnahme/Verteilung an mehreren Punkten nach einem der Ansprüche 1 bis 3, bei der die Weiterleitung zur Aufnahme/Verteilung zwischen den Leitungen (C1 bis C9) und den Öffnungen (01 bis 09) durch Querkanäle (K1 bis K9) gewährleistet ist.

5. Vorrichtung zur Aufnahme/Verteilung an mehreren Punkten nach einem der Ansprüche 1 bis 3, bei der die Anzahl von Eingangs-/Ausgangsöffnungen (01 bis 09) für jede Zwischenaufteilung zwischen allen Öffnungen auf einer einzigen Höhe (H1, H2, H3) und einer einzigen Öffnung pro unterschiedlicher Höhe durch Anpassung des Abstandes der Leitungen (C1 bis C9) auf jeder Höhe (H1, H2, H3) ausgewählt werden kann.

6. Verwendung einer Vorrichtung nach einem der vorhergehenden Ansprüche, die unter einer Sonde (10) zur Rotationsmessung des Lufteintritts (F) in einen Kompressor einer Turbomaschine, einem Injektor von Flüssigkeit oder Gas in eine Leitung und einem Schmierelement eines mechanischen Teils ausgewählt ist.

7. Verwendung nach dem vorhergehenden Anspruch als Sonde (10), bei der ein Sondenkörper (1) einen ersten Teil (12) oder Abschnitt zur Druckaufnahme aufweist, der einen Zylinder von weniger als 6 mm Durchmesser, vorzugsweise im Wesentlichen 5 bis 5,5 mm, bildet.

8. Verwendung nach Anspruch 7, bei der die Leitungen (C1 bis C9) und die Kanäle (K1 bis K9) durch selektive Fusion bei der Herstellung des Körpers aus einem Pulver aus einer Metalllegierung verwirklicht sind.

9. Verwendung nach einem der Ansprüche 7 bis 9, bei der die Anzahl von inneren Leitungen (C1 bis C9) gleich neun ist, wobei drei Öffnungen (01 bis 03, 04 bis 06, 07 bis 09) auf drei unterschiedlichen Höhen (H1 bis H3) angeordnet sind.

10. Verwendung nach dem vorhergehenden Anspruch, bei der die Leitungen zur Weiterleitung einer Druckaufnahme auf jeder Aufnahmehöhe (H3) aus einer zentralen Leitung (C8), die zwischen zwei seitlichen Leitungen (C7, C9) angeordnet ist, bestehen, wobei die seitlichen Leitungen (C7, C9) einen Winkelversatz zwischen 35 und 45°, vorzugsweise im Wesentlichen gleich 40°, in Bezug zur zentralen Leitung (C8) aufweisen.

## Claims

1. Device for multipoint acquisition/distribution of fluid comprising at least two internal ducts (C1 to C9) arranged in a cylindrical body (1), **characterized in that** these ducts follow helicoidal traces in a cylindrical section (12), having the same axis as the one of the body (1), in which several acquisitions/distributions of fluid are carried out by propagation in the ducts (C1 to C9) from inlet/outlet orifices (01 to 09) formed on an external radial skin (11) of the cylindrical section (12) of the body in regards of the ducts (C1 to C9) in several parallel planes at different heights (H1, H2, H3) along the axis of the body (1), the position of the orifices (01 to 09) and the pitch of the ducts (C1 to C9) being determined so that at least one orifice corresponds to a one and only internal duct.

2. Device for multipoint acquisition/distribution according to claim 1, in which the internal ducts (C1 to C9) have an oblong-shaped section in order to maximize the volume dedicated to ducts with respect to the volume of the probe in the acquisition/distribution section (12).

3. Device for multipoint acquisition/distribution according to one of claims 1 or 2, in which the probe body (1) is cylindrical and the internal ducts (C1 to C9) have a section in the form of flower petals distributed circularly inside the probe section (10), each petal having a widened transverse part (E) and a tapered part (L) directed in a centripetal way towards the axis (X'X) of this body (1).

4. Device for multipoint acquisition/distribution according to anyone of claims 1 to 3, in which the acquisition/distribution transfer between ducts (C1 to C9) and orifices (01 to 09) is provided by transverse channels (K1 to K9).

5. Device for multipoint acquisition/distribution according to anyone of claims 1 to 4, in which the number of inlet/outlet orifices (01 in 09) can be chosen for any intermediate distribution from all orifices at a single height (H1, H2, H3) to a single orifice at each different height by way of adapting the pitch of the ducts (C1 to C9) to each height (H1, H2, H3).

6. Use of a device according to anyone of previous claims, chosen among an air inlet (F) probe (10) for measuring gyration in a turbomachine compressor, an injector for injecting liquid or gas into a vein and a mechanical part lubricator.

7. Use according to the previous claim as a probe (10), in which a probe body (1) presents a first part (12) or section for acquiring pressure forming a cylinder of less than 6 mm in diameter, preferably substantially 5 to 5.5 mm.

8. Use according to claim 7, in which ducts (C1 to C9) and channels (K1 to K9) are made by selective melting during the manufacture of the body from metal alloy powder.

9. Use according to anyone of claims 7 to 9, in which the number of internal ducts (C1 to C9) is equal to nine, three orifices (01 to 03, 04 to 06, 07 to 09) are arranged at three different heights (H1 to H3).

10. Use according to the previous claim, in which the ducts for transferring pressure acquisition consist at each height of acquisition (H3) of a central duct (C8) arranged between two side ducts (C7, C9), the side ducts (C7, C9) presenting an angular shift of 35 to 45°, preferably substantially 40°, with regard to the central duct (C8).
